# EUROPEAN PATENT APPLICATION

(11) **EP 1 092 955 A1**
(43) Date of publication of application: **18.04.2001**
(21) Application number: 00304290.0
(22) Date of filing: 22.05.2000
(51) Int. Cl.: G01D 5/14, G01D 5/251, G01B 7/30

(54) **Position sensor**

(30) Priority: 20.05.1999 GB 9911782
(71) Applicant: AB Electronic Limited, Romford, Essex RM7 9LP (GB)
(72) Inventor: Dietrich,Frank Hermann, Hutton, Essex CM13 1QZ (GB)
(74) Representative: Gallafent, Richard John

(57) **Abstract**

A position sensor is described which has a planar array of magnetic condition sensing devices, preferably Hall effect devices (H1, H2, etc), with overlapping sensing areas. By sensing the magnitude of signals from the devices, and processing such data in signal processing means (18), the position relative to the sensor of a change in magnetic conditions may be determined. Such a change may be conveniently provided by e.g. a ferromagnetic bar or a gap (28) in a ferromagnetic object. The invention is useful in monitoring the position of e.g. a toothed wheel in a piece of heavy construction machinery.

## Description

This invention relates to a position sensor, that is, a device for sensing linear or rotary position, and relates especially to a position sensing system incorporating magnetic condition sensing devices such as Hall effect devices.

Linear and rotary position sensors are known which are mechanically coupled to the part whose position is to be sensed. In harsh environments, the moving parts must be dynamically sealed, which is possible for a small diameter axle, but extremely difficult for large diameter parts or ring shapes or parts which move in a straight line.

It is also known to provide an array of proximity switches as a position sensor, which has no moving parts and which can be sealed, but the arrangement can be expensive and have low resolution.

In another alternative, a magneto-resistive system can be used which is contactless, and which can be sealed, but it requires extra magnets, it is expensive and it has a high temperature coefficient.

It is the object of the invention to provide a position sensor which overcomes the disadvantages of the prior art.

According to the invention, a position sensor comprises a planar array of magnetic condition sensing devices spaced so that the sensing areas of adjacent devices are contiguous or overlapping; sensing means to sense the magnitude of the signals from each Hall effect device; and signal processing means to derive from the sensed signals, the position relative to the sensor of a change in magnetic conditions.

The change in magnetic conditions may be caused by the presence adjacent the sensor of a bar of magnetised material, each edge of the bar causing a change in magnetic conditions.

Preferably there is further provided a magnet associated with each magnetic condition sensing device, when the change in magnetic conditions may be caused by the presence adjacent the sensor of a bar of ferromagnetic material, or of a gap in a planar ferromagnetic object, each edge of the bar or each edge of the gap constituting a change.

The signal processing means may be arranged to determine the position of the centre line of the gap or the bar.

The magnetic condition sensing devices may be arranged in a full circle or a part circle for the sensing of angular position, or in a straight line for the sensing of linear position.

The invention will now be described by way of example only with reference to the accompanying drawings in which:
Figures 1a and 1b illustrate in plan and sectional views a Hall effect ring sensor according to the invention;
Figures 2a and 2b illustrate in view and vertical section the sensor of Figure 1 used to sense the angular position of the tooth wheel of a lorry;
Figure 3 illustrates the outputs of individual Hall effect devices;
Figure 4 is an alternative illustration of the outputs of the Hall effect devices;
Figure 5 is a flow chart indicating the signal processing;
Figures 6a, b and c illustrate three alternative arrays of Hall effect devices; and
Figure 7 illustrates schematically a sensor used to sense the position of a magnetised bar.

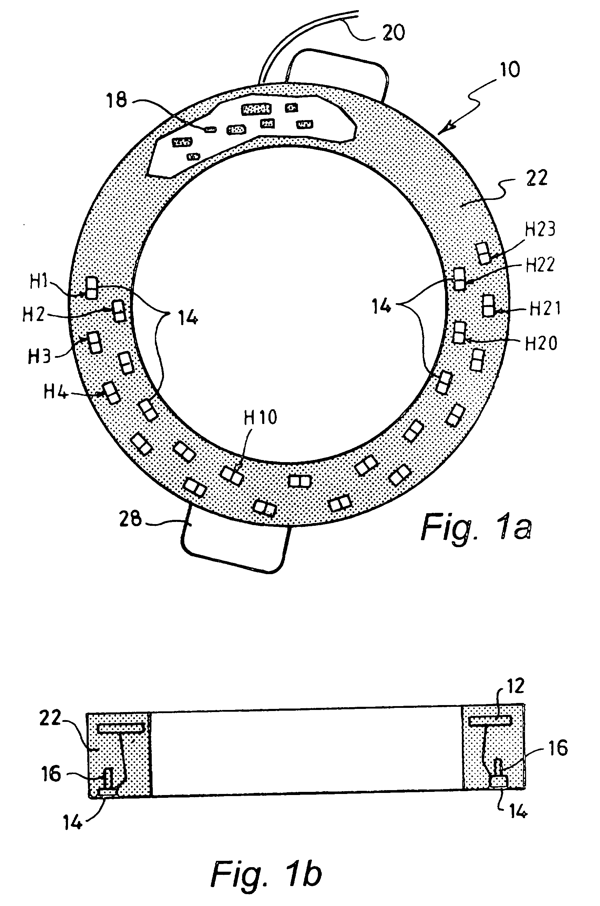

In Figure 1, the sensor 10 comprises a ring-shaped printed circuit board 12 carrying twenty three Hall effect devices 14 numbered H1 to H23 in a planar array and each associated with a magnet 16 projecting away from that plane. The board 12 also carries electronic components 18 which process the signals from the sensor 14, the components 18 being connected by a connector 20 to a display device (not shown). The PCB 12, the Hall effect devices 14, magnet 16 and electronic components 18 are all enclosed by a potting material 22 to form the ring-shaped sensor 10. The Hall effect devices may be screen printed on the PCB 12.

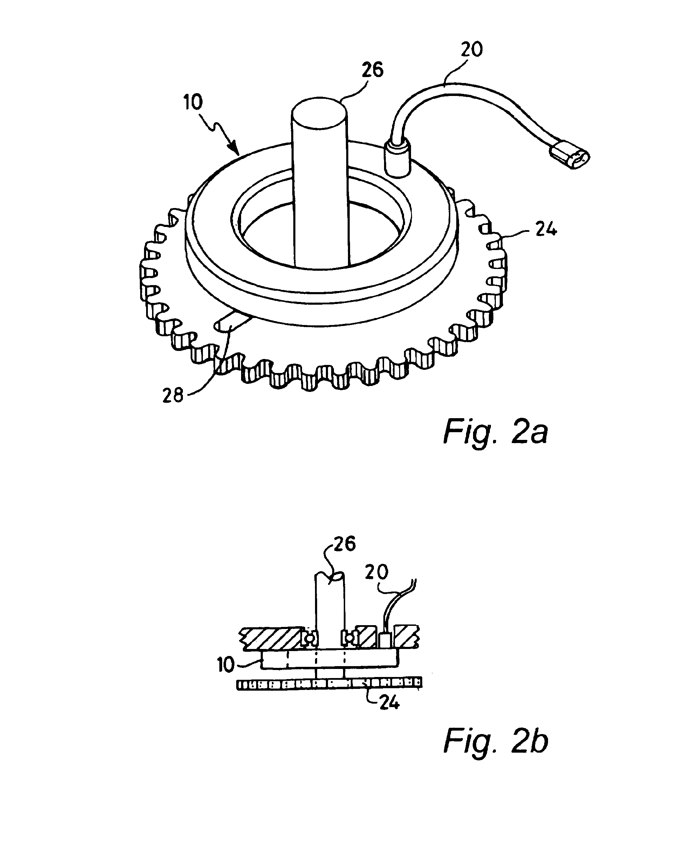

Figure 2 shows the sensor 10 in place to sense the angular position of the tooth wheel 24 typical of a heavy construction machine or lorry. The ring sensor 10 is placed in position around the spindle 26 of the tooth wheel 24, and the tooth wheel slot 28 is clearly visible as it projects to a greater radius than that of the sensor 10. Figure 2b shows that the sensor 10 is positioned to lie a small distance above the tooth wheel 24; the distance may be from 1mm to 15mm without loss of accuracy.

Referring once more to Figure la, the tooth wheel slot 28 is shown in an angular position adjacent to Hall effect devices H9, H10 and H11; the devices H10 and H11 are in a position to lie above the slot 28. Devices H8 and H12 are close to the edges of the slot 28, and all the other devices are remote from the slot and lie in alignment with the tooth wheel 24, which is made of ferromagnetic material.

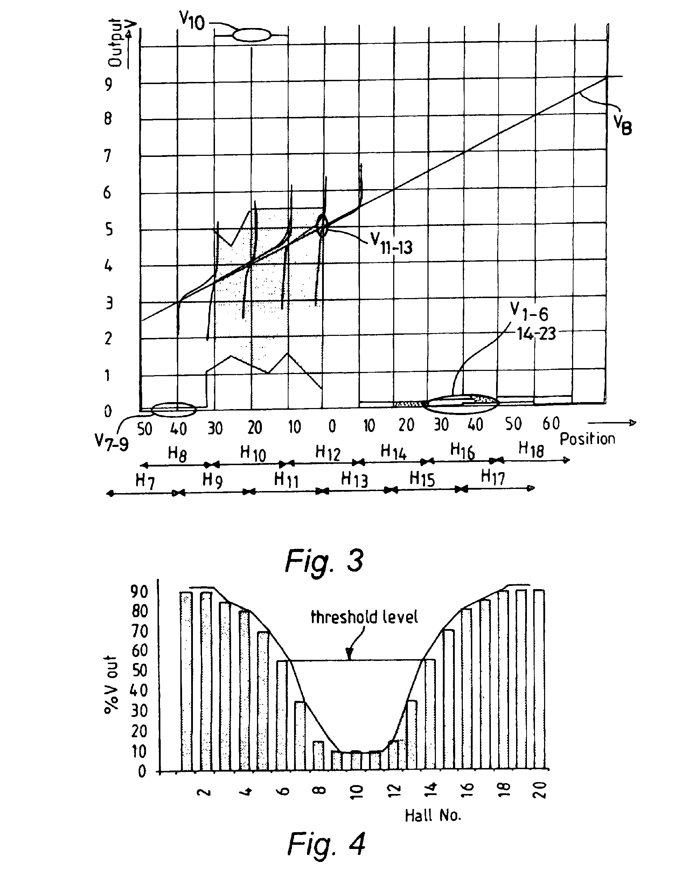

The outputs of all the sensors are shown in Figure 3 which is a plot of Voltage against position. The sensing areas of the Hall effect devices are shown by the numbered arrows at the lower part of the Figure. A bias voltage is applied as shown by the line V_{B}.

Most of the devices, i.e. devices H1 to H6 and H14 to H23, lie close to the ferromagnetic material of the tooth wheel and the combined effect of the ferromagnetic material and the magnet associated with each device is that for each of these devices, the output voltage is zero, as shown in Figure 3 by the horizontal oval V₁₋₆, ₁₄₋₂₃.

The device H10 lies within the gap 28, and the absence of ferromagnetic material causes the output of this device to be high, as indicated by the horizontal oval V₁₀ at the top of the Figure.

The sensors H7, H8 and H9 lie adjacent one edge of the gap 28 and each have a voltage output of intermediate value, as indicated by the vertical oval V_{7,9}, and similarly sensors H11, H12 and H13 have an intermediate output indicated by the vertical oval V₁₁₋₁₃ at a higher bias voltage.

Figure 4 is an alternative presentation of the signals, showing voltage percentage output for the Hall devices H1 to H20. The voltage envelope forms a "bath tub" shape.

By known signal processing techniques, the centre line of the slot can be determined from the outputs of the Hall effect devices, and therefore the angular position of the fifth wheel can be sensed.

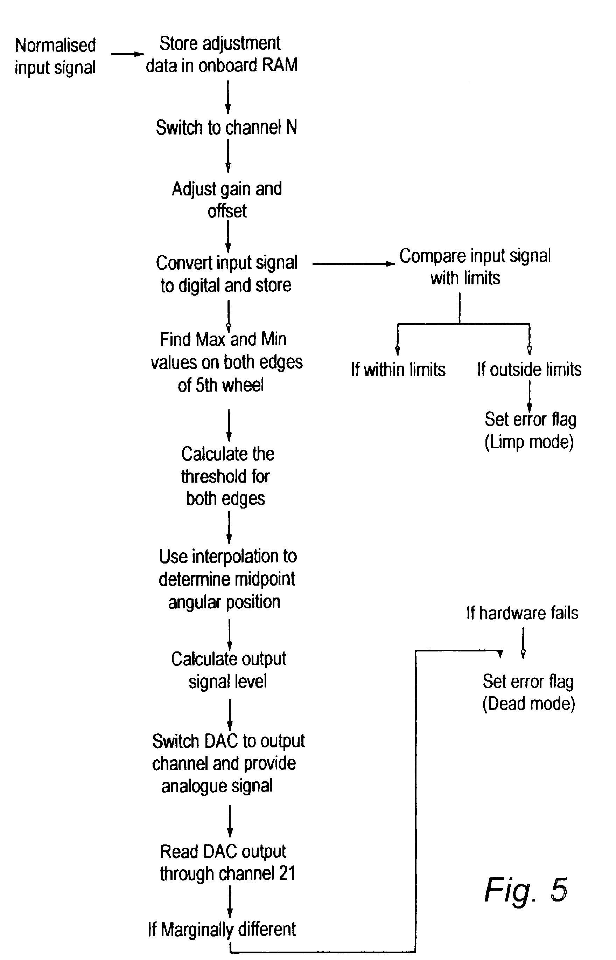

Conveniently, the signal processing components perform the calculation on the signals received from every device in the array, and Figure 5 is a flow chart of the process. The processing can be performed by a microprocessor or by operational amplifiers, and a suitable display can be provided. Such signal processing provides acceptable accuracy in angular sensing. For greater accuracy, a fuzzy logic programme could be incorporated.

Referring once more to Figure 3, it will be seen that the active zones of each Hall effect device overlaps that of each adjacent device by 50 percent. This triple-redundancy arrangement means that an accurate sensing of angle is still possible when one device fails.

While the sensor has been described with reference to sensing the angular position of the fifth wheel of a lorry, the angular position of any other object can be sensed by providing the required magnetic conditions.

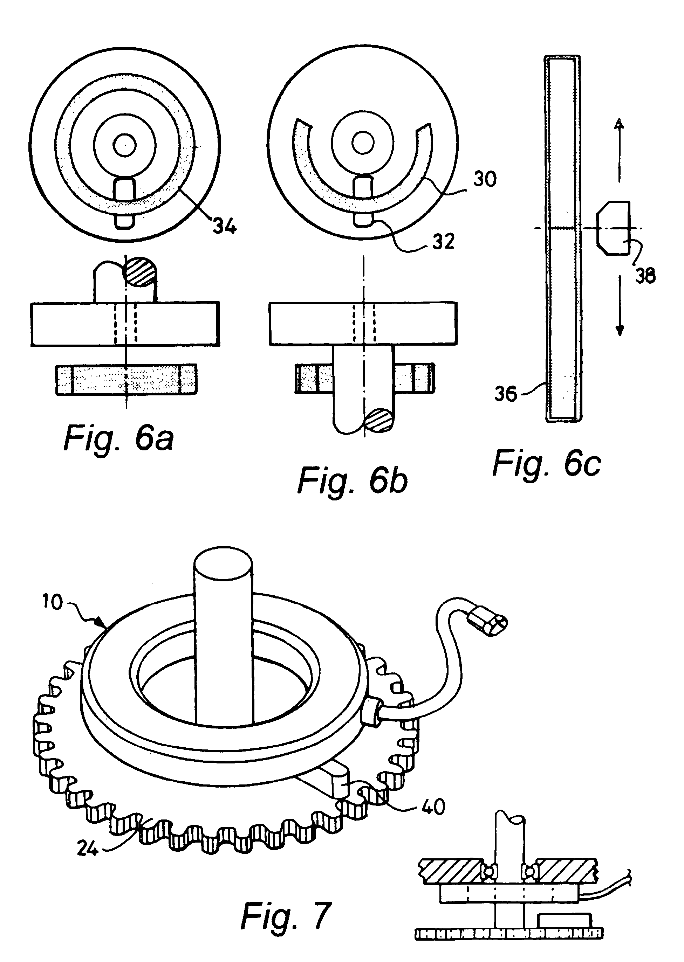

Figure 6 illustrates three basic formats for a sensor according to the invention. Figure 6b illustrates schematically a system as described above with the Hall effect devices in a partial ring or horseshoe 30 adjacent to a slot 32. The partial ring may encompass an angle of 200°. Figure 6a shows the devices arranged in a full ring 34.

A sensor according to the invention can also be used to sense linear position, as illustrated in Figure 6c where a linear array of Hall effect devices 36 is arranged adjacent a ferromagnetic bar 38 which moves parallel to the array. The position of the bar 38 can be sensed. Figure 7 (which is similar to Figure 2) shows that the angular position of a ferromagnetic bar 40 above the fifth wheel 24 can be sensed instead of a slot in the wheel.

In any arrangement in which a ferromagnetic bar is to be sensed in contrast to a gap in a ferromagnetic object, the outputs of the devices illustrated in Figures 3 and 4 would be reversed.

In a variation (not illustrated), the individual magnets associated with each Hall effect device are omitted, and the sensor can then be used to sense the linear or angular position of a magnetised bar.

It will be appreciated that in all embodiments, it is not necessary to provide any dynamic mechanical seals.

In the embodiments described above, the position of the centre of a slot in a ferromagnetic object of a bar of ferromagnetic material has been described, i.e. the median of two ferromagnetic edges. By a variation of the signal processing, the position of a single ferromagnetic edge could be determined.

In any arrangement, the effective sensing is carried out by a small number of Hall effect devices in the array, i.e. those giving intermediate voltage outputs, which form a small area of the array; a beneficial result is that the effective temperature coefficient of the sensor is equal to the temperature coefficient of one Hall effect device divided by the number of devices used in the calculation, and is therefore low.

Similarly, when the calculation is based on all the Hall effect devices, the effective non-linear error of the system is equal to the non-linear error of one Hall effect device divided by the number of devices.

## Claims

1. A position sensor comprising a planar array of magnetic condition sensing devices (H1, H2...) spaced so that the sensing areas of adjacent devices are contiguous or overlapping; sensing means (18) to sense the magnitude of the signals from each such sensing device; and signal processing means to derive from the sensed signals, the position relative to the sensor of a change in magnetic conditions.

2. A position sensor according to Claim 1 wherein the sensing devices (H1, H2...) are Hall effect sensors.

3. A position sensor according to Claim 1 or 2 wherein a magnet is associated with each magnetic condition sensing device, enabling the change in magnetic conditions to be caused by the presence adjacent the sensor of a bar of ferromagnetic material or of a gap in a planar ferromagnetic object, each edge of the bar or each edge of the gap constituting a change.
